# EUROPEAN PATENT SPECIFICATION

(11) **EP 3 264 274 B1**
(45) Date of publication and mention of the grant of the patent: **13.03.2019**
(21) Application number: 17164262.2
(22) Date of filing: 31.03.2017
(51) Int. Cl.: G06F 11/36

(54) **INPUT DISCOVERY FOR UNKNOWN PROGRAM BINARIES**
EINGABEENTDECKUNG FÜR UNBEKANNTE PROGRAMMBINÄRDATEIEN
DÉCOUVERTE D'ENTRÉE POUR BINAIRES DE PROGRAMME INCONNUS

(30) Priority: 30.06.2016 US 201615198064
(43) Date of publication of application: 03.01.2018
(73) Proprietor: FUJITSU LIMITED, Kawasaki-shi, Kanagawa 211-8588 (JP)
(72) Inventor: MURTHY, Praveen, Sunnyvale, CA California 94085 (US)
(74) Representative: Haseltine Lake LLP

(56) References cited:
- US-A1- 2009 007 077
- US-A1- 2015 269 061
- US-A1- 2015 378 868
- JIANMIN CHEN ET AL: "Ewap: Using Symbolic Execution to Exploit Windows Applications", COMPUTER SCIENCE AND INFORMATION ENGINEERING, 2009 WRI WORLD CONGRESS ON, IEEE, PISCATAWAY, NJ, USA, 31 March 2009 (2009-03-31), pages 733-738, XP031493887, ISBN: 978-0-7695-3507-4

## Description

### FIELD

The embodiments discussed herein are related to input discovery for unknown program binaries.

### BACKGROUND

Efficient testing of a binary file may be improved by knowledge of which inputs are valid for the binary file. The binary file may include code and routines that a human may interpret as text. However, the text included in the code and routines of the binary file are not human-readable. It is impossible for human testers of the binary file to determine valid inputs for the binary file by reviewing the code and routines of the binary file because the code and routines are not human readable. As a result, the human testers may review specifications, documentation or source code associated with the binary file in order to determine which inputs are valid for the binary file. These valid inputs may then be used to achieve more efficient testing of the binary file. In some situations, specifications, documentation, and source code associated with the binary file may not be available. In these situations, a process may be used to discover inputs for the binary file.
*"*Ewap: Using Symbolic Execution to Exploit Windows Applications" by J Chen et al discloses an approach in which Ewap analyzes and instruments the binary codes of target applications dynamically. During the execution process, the instrumented code traces data flows with an improved taint analysis mechanism and accomplishes two tasks: 1) generating path constraints used for symbolic execution, 2) detecting security violations. During the implementing of Ewap, the key technologies including IR-based instrumentation, taint analysis mechanism, symbolic execution and violations detection are introduced and adopted.

### SUMMARY

The invention is defined by the independent claims. Further aspects of the invention are outlined in the dependent claims. Embodiments relate only to claimed combinations of features. In the following, when the term "embodiment" relates to unclaimed combinations of features, said term has to be understood as referring to examples of the present invention.

According to an aspect of an embodiment, a method to discover an input sequence for an unknown binary program is disclosed. The method includes: obtaining a first input sequence for an unknown binary program, the unknown binary program being a binary program with a specification, documentation and/or source code which is/are unavailable; instrumenting the unknown binary program such that execution of the instrumented unknown binary program results in generation of a branch count and an execution trace; and performing multiple executions of the instrumented unknown binary program. Each of the multiple executions uses a different one of multiple different mutations of the first input sequence as an input and each of the multiple executions results in generation of a branch count and an execution trace. The method further includes: selecting one of the multiple different mutations of the first input sequence when a first branch count, which is from the execution using the one of the multiple different mutations as the input to the instrumented unknown binary program, is different from a second branch count from the execution of the instrumented unknown binary program using the first input sequence as the input to the instrumented unknown binary program; negating a branch condition in the execution trace corresponding to the selected one of the multiple different mutations of the first input sequence; creating a symbolic path condition corresponding to the execution trace with the negated branch condition; and solving the symbolic path condition to obtain a second input sequence.

The object and advantages of the embodiments will be realized and achieved at least by the elements, features, and combinations particularly pointed out in the claims.

It is to be understood that both the foregoing general description and the following detailed description are exemplary and explanatory and are not restrictive of the present disclosure, as claimed.

### BRIEF DESCRIPTION OF THE DRAWINGS

Example embodiments will be described and explained with additional specificity and detail through the use of the accompanying drawings in which:
Fig. 1 illustrates an example input sequence determination process;
Fig. 2 is a block diagram of an example input determination system;
Figs. 3A and 3B are a flow chart of an example method to discover input sequences for an unknown binary program; and
Fig. 4 is a flow chart of another example method to discover input sequences for an unknown binary program.

### DESCRIPTION OF EMBODIMENTS

An acceptable method to discover input sequences for an unknown binary program may include various elements. One element may include covering a high percentage of the code and routines included in the unknown binary program (excluding dead code). For example, one or more test inputs or input sequences selected for testing an unknown binary program may cover one hundred percent or near one hundred percent of the code and routines for the unknown binary program (e.g., ninety percent to one hundred percent of the binary program, excluding dead code and routines). Some current methods rely on generation of random test inputs for testing the unknown binary program. Unfortunately, testing methods that include generation of random test inputs for testing an unknown binary program may be unable to consistently cover a high percentage of the code and routines for the unknown binary program because randomly generated test inputs may be inherently incompatible with the goal of consistently covering a high percentage of the code and routines for the unknown binary program. As a result, some existing methods are not able to consistently cover a high percentage of the code and routines for the binary program, so these methods are not considered acceptable.

Another element of an acceptable method to discover input sequences for an unknown binary program may include the ability to be effectively implemented without a specification, documentation, or source code associated with the unknown binary program. This requirement may be beneficial in the field of autonomous software security where it is beneficial for a computer system to automatically determine vulnerabilities in software. In some situations, an unknown binary program may be available to human testers of the unknown binary program, but the specification, documentation and source code associated with the unknown binary program may be unavailable. Some existing methods attempt to discover inputs for an unknown binary program. However, these methods rely on randomly generated test inputs or have other deficiencies.

Yet another element of an acceptable method for discovering input sequences for an unknown binary program may include platform independence. Platform independence may beneficially improve the portability of the methodology as well as provide other benefits.

Currently, there does not appear to be a method to discover input sequences for an unknown binary program that includes the elements discussed above. Various methods have been used to discover input sequences for an unknown binary program. However, none of these methods provide all or even some of the elements discussed above of an acceptable method for discovering input sequences for an unknown binary program.

One such method may be referred to as "symbolic execution." The symbolic execution approach includes determining inputs for the unknown binary program which may drive the program along various execution paths. This approach may be successful in some instances. However, one deficiency associated with the symbolic execution approach used in isolation is the use of a source file associated with an unknown binary program. In some instances, the source file may be unavailable. As a result, implementation of the symbolic execution approach may not be possible in these instances. For at least this reason, the symbolic execution approach by itself is not an acceptable method for discovering inputs for an unknown binary program.

Another method is known as "black-box fuzzing." This approach may include selecting a string and randomly altering the string. The string may be fed to an unknown binary program as an input after each alteration. Although this approach may work given enough time, most of the inputs generated by black-box fuzzing are invalid inputs. This is problematic since valid inputs are needed in order to mutate and identify additional valid inputs. An additional problem associated with black-box fuzzing is that this approach does not guarantee high coverage of an unknown binary program since it is reliant on random inputs, and so, it is impossible to know whether the results of implementing black-box fuzzing achieve high coverage. As a result, implementation of the "black-box fuzzing" approach without any other methodologies may not be an acceptable method for discovering inputs for an unknown binary program.

Another method is known as "white-box fuzzing." The white-box fuzzing approach is similar to black-box fuzzing, with the exception that valid inputs are used to gather symbolic constraints, which may then be analyzed to produce test inputs. The white-box fuzzing approach may be considered an improvement over black-box fuzzing since it includes at least some inputs that are not arrived at randomly. However, the white-box approach requires valid inputs as a prerequisite before it may be implemented to determine test input. In some instances valid inputs will not be available as seeds for the white-box fuzzing approach. For this reason, the white-box fuzzing approach implemented alone may be unable to solve the problem of discovering inputs for an unknown binary program.

Another method is known as "unit testing," in which the code for a program is divided into units and tested systematically. Although unit testing may be able to achieve high coverage testing of a binary program in some instances, this approach always requires source files or other documentation associated with an unknown binary program binary such as the specification for the unknown binary program. Without this information, unit testing may not be implemented. As such, the unit testing approach is unable to solve the problem of discovering inputs for an unknown binary program because it requires source files or some other documentation. Another deficiency associated with the unit testing approach is that it is platform dependent. The unit testing approach is also considered to be slow and expensive.

Another method is known as "specification-based testing." However, as the name implies, the specification-based testing approach always requires source files or other documentation associated with an unknown binary program. As such, this approach is unable to solve the problem of discovering inputs for an unknown binary program because it requires source files or some other documentation. Similar to unit testing, the specification-based testing approach is also platform dependent and considered to be slow and expensive.

Other methods may include "reverse code engineering." Reverse code engineering approaches may include: the "information exchange analysis" approach; the "disassembly" approach; and the "decompilation" approach. The information exchange analysis approach may not be effective if no information is exchanged by an unknown binary program, and so, this approach is limited and not acceptable for this reason. The disassembly approach relies on a static or dynamic analysis of raw assembly code, which has a number of deficiencies. For example, static or dynamic analysis of raw assembly code is computationally expensive, imprecise, does not scale well and likely to introduce significant performance overheads. The decompilation approach attempts to reconstruct the source code associated with an unknown binary program and proceed with the testing using the source code and the unknown binary program. However, in practice the decompilation approach does not work in many situations and may render a source code file that is unusable or not high quality because in actuality it differs substantially from the original source code file it attempts to reconstruct.

Some embodiments discussed in this disclosure are related to systems and/or methods to discover input sequences for an unknown binary program. In these and other embodiments, an input sequence may be a sequence of two or more variables for the unknown binary program. By discovering input sequences for the unknown binary program, the unknown binary program may be tested without any knowledge of the unknown binary program.

In some embodiments, a second input sequence for the unknown binary program may be discovered based on generating multiple mutations of a first input sequence and performing multiple executions of the unknown binary program using the first input sequence and the multiple mutated input sequences. During the different executions of the unknown binary program a branch count indicating a number of branches encountered during each execution of the unknown binary program may be recorded. The branch counts from the different executions of the unknown binary program may be compared with each other. Alternatively or additionally, during the different executions of the unknown binary program, executions of one or more branch instructions may be recorded in an execution trace. The execution traces from the different executions of the unknown binary program may be compared with each other. When one or more of the recorded branch counts and/or execution traces are different from the other branch counts and/or execution traces, the execution trace corresponding to the different branch count or different execution trace may be selected. A branch in the selected execution trace may be negated and a symbolic path condition may be generated from the negated branch and the other branches in the selected execution trace. The symbolic path condition may be solved to generate a second input sequence.

In some embodiments, the systems and/or methods described in this disclosure may also be platform independent. As a result, the systems and/or methods described in this disclosure may be portable and used in a variety of operating environments. In some embodiments, the systems and/or methods described in this disclosure may also be successfully implemented without source code or documentation associated with an unknown binary program. In some embodiments, the systems and/or methods described in this disclosure may also be implemented without packet sniffing, bus analysis, or any other methodology that relies on information exchange. As a result, the systems and/or methods described in this disclosure may be implemented without the use of reverse code engineering techniques.

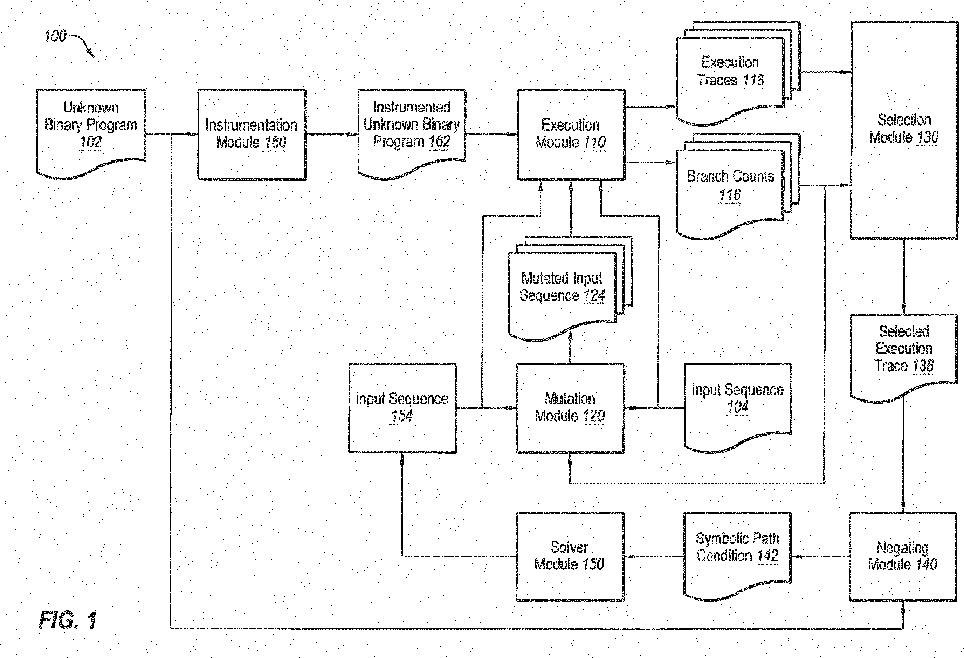

Fig. 1 illustrates an example input sequence determination process 100, arranged in accordance with at least one embodiment described in this disclosure. In some embodiments, the process 100 may use an instrumentation module 160, an execution module 110, a mutation module 120, a selection module 130, a negating module 140, and a solver module 150 to discover input sequence 154 for an unknown binary program 102.

In general, the process 100 may be used to iteratively discover input sequences for the unknown binary program 102. For example, the process 100 may use an input sequence 104 and mutations of the input sequence 104 to discover an input sequence 154 during a first iteration of the process 100. During a second iteration of the process 100, the input sequence 154 and mutations of the input sequence 154 may be used to discover another input sequence to replace the input sequence 154 that may be used as the input sequence for the next iteration of the process 100. Thus, the input sequence 154 as illustrated in the process 100 may change during each iteration of the process 100. A description of the modules in the process 100 is provided followed by an example of the process 100.

The instrumentation module 160 may be configured to receive an unknown binary program 102. The unknown binary program 102 may be an entire binary program or a partial binary program, such as one or more functions or other aspects of a program. In these and other embodiments, the unknown binary program 102 may include a compiled version of a program. The program may include code and routines describing the functionality of the program. The code and routines of the program may define inputs that may be valid for the program and the unknown binary program 102 which is a compiled version of the program. In some embodiments, the inputs for the program may include one or more input strings. An input not defined as valid by the code and routines may be an invalid input for the program and thus for the unknown binary program 102.

The unknown binary program 102 may include code and routines encoded in binary form and stored on a non-transitory computer-readable storage medium for execution by a processing device. Although the code and routines of the unknown binary program 102 may include portions that may be interpreted by a human as text, the code and routines of the unknown binary program 102 may not be human-readable. In these and other embodiments, the code and routines may be machine readable. For example, the code and routines may be binary or some other machine readable format.

The unknown binary program 102 may be "unknown" because valid input sequences for the unknown binary program 102 may be unknown. For example, the specification, documentation, and/or source code associated with the unknown binary program 102 may not be available to a human tester or other testing equipment of the unknown binary program 102. As a result, the human tester or the other testing equipment may not be able to determine valid inputs sequences for the unknown binary program 102.

The instrumentation module 160 may be configured to generate an instrumented unknown binary program 162 based on the unknown binary program 102. In these and other embodiments, to generate the instrumented unknown binary program 162, the instrumentation module 160 may instrument the unknown binary program 102. To instrument the unknown binary program 102, the instrumentation module 160 may input additional code instructions in the unknown binary program 102. The unknown binary program 102 may be an instrumented unknown binary program. The additional code instructions may output information about the execution or run time of the unknown binary program 102. For example, the additional code instructions may output information concerning a branch count of the number of branches encountered during execution of the unknown binary program 102, an execution trace of the code instructions executed during the execution of the unknown binary program 102, or memory addresses accessed during the execution of the unknown binary program 102.

In some embodiments, the instrumentation module 110 may include a binary instrumentation program, such as PIN or some other binary instrumentation program. The instrumentation module 160 may provide the instrumented unknown binary program 162 to the execution module 110.

The execution module 110 may be configured to receive an instrumented unknown binary program 162 and an input sequence 104, multiple mutated input sequences 124, and/or an input sequence 154.

In some embodiments, the input sequence 104 may include one input for the instrumented unknown binary program 162. Alternatively or additionally, the input sequence 104 may include two or more different inputs for the instrumented unknown binary program 162. In these and other embodiments, the different inputs for the input sequence 104 may be variables, numbers, sequences of characters, such as commands and response, among other types of inputs that may be formatted in any number of manners. In these and other embodiments, inputs may include a command determined as valid for the unknown binary program and an argument associated with the command.

In some embodiments, inputs for the instrumented unknown binary program 162 may not have been previously discovered nor determined to be valid inputs for the instrumented unknown binary program 162. Alternatively or additionally, inputs of the input sequence 104 for the instrumented unknown binary program 162 may have been previously discovered and determined to be valid inputs for the instrumented unknown binary program 162.

The execution module 110 may be configured to execute the instrumented unknown binary program 162. In some embodiments, the execution module 110 may execute the instrumented unknown binary program 162 multiple times. For example, the execution module 110 may be configured to execute the instrumented unknown binary program 162 separately for each of the input sequence 104 and the multiple mutated input sequences 124. Alternatively or additionally, the execution module 110 may be configured to execute the instrumented unknown binary program 162 separately for the input sequence 154.

In these and other embodiments, each execution of the unknown binary program 102 may be performed using one of the input sequence 104, the input sequence 154, and the multiple mutated input sequences 124 as an input for the instrumented unknown binary program 162. For example, if there are one input sequence 104 and three mutated input sequences 124, the execution module 110 may execute the instrumented unknown binary program 102 four times, once for the input sequence 104 and once for each of the three mutated input sequences 124.

The execution module 110 may be configured to generate and output a branch count 116 and an execution trace 118 for each execution of the instrumented unknown binary program 162. In some embodiments, an execution trace 118 may be a listing of every instruction of the unknown binary program 102 executed during the execution of the instrumented unknown binary program 162. Alternatively or additionally, an execution trace 118 may be a listing of every branch instruction of the unknown binary program 102 executed during the execution of the instrumented unknown binary program 162. Alternatively or additionally, an execution trace 118 may be a listing of every conditional branch instruction of the unknown binary program 102 executed during the execution of the instrumented unknown binary program 162.

In some embodiments, an instruction may be a single operation of a processor. For example, an instruction may cause the execution module 110 to add two variables, to subtract two variables, to copy a variable, or to branch to another location in the program. An instruction may also cause the execution module 110 to perform other operations. A branch instruction in the unknown binary program 102 may be an instruction, the execution of which may result in the execution module 110 executing a different instruction sequence rather than the next instruction in order. A branch instruction may be unconditional, which may result in branching regardless of any conditions at the time the instruction is executed. A branch instruction may also be conditional, which may result in one of multiple different instructions being executed after execution of the branch instruction depending on the result of a logical condition. For example, execution of a conditional branch instruction may result in a first instruction or first instruction sequence being executed following execution of the branch instruction if a variable is greater than or equal to a quantity. Execution of the branch instruction may result in a second instruction or second instruction sequence being executed following execution of the branch instruction if the variable is less than the quantity. The branch instruction may have logical conditions that determine which instruction or instruction sequence in the unknown binary program 102 will be executed following execution of the branch instruction.

A branch count 116 may be a count of the number of branch instructions executed during an execution of the instrumented unknown binary program 162. A branch count 116 may be determined by counting the number of branch instructions in an execution trace 118 generated by an execution of the instrumented unknown binary program 162. Alternatively or additionally, execution of the instrumented unknown binary program 162 may result in the generation and output of a branch count 116.

During each execution of the instrumented unknown binary program 162, using one of the input sequence 104, the input sequence 154, and the multiple mutated input sequences 124, the execution module 110 may be configured to record a branch count 116 and an execution trace 118. The execution module 110 may thus generate multiple sets of branch counts 116 and execution traces 118, each set of a branch count 116 and an execution trace 118 corresponding to one of the input sequence 104, the input sequence 154, and the multiple mutated input sequences 124. Each set of the sets of recorded branch counts 116 and execution traces 118 may correspond and be associated with each other and with the input sequence 104, the input sequence 154, or one of the multiple mutated input sequences 124 that, when executed, results in the set of recorded branch counts 116 and execution traces 118. The sets of recorded branch counts 116 and execution traces 118 may be provided to the selection module 130 and the branch counts 116 may be provided to the mutation module 120.

The mutation module 120 may be configured to receive the input sequence 104 and the branch counts 116 to generate the multiple mutated input sequences 124. The mutation module 120 may generate the multiple mutated input sequences 124 by adding to, subtracting from, or changing the input sequence 104. For example, if the input sequence 104 is "HIKE," the mutation module 120 may add to the input sequence 104 to generate a mutated input sequence 124, "HIKER." Alternatively, the mutation module 120 may subtract from the input sequence 104 to generate "HI" as the mutated input sequence 124. The mutation module 120 may change the input sequence 120 to generate "BIKE" as the mutated input sequence 124. The mutation module 120 may also perform successive mutations on the input sequence 104 to generate "BIKER" as the mutated input sequence 124 by changing the input sequence 104 and adding to the input sequence 104. In addition, the mutation module 120 may mutate only a portion of the input sequence 104. For example, if the input sequence 104 is "GET aaaa," the mutation module 120 may mutate the "aaaa" portion while not mutating the "GET" portion of the input sequence 104 to generate "GET <key>" as the mutated input sequence 124.

The mutation module 120 may also be configured to receive the second input sequence 154 from the solver module 150 and the branch counts 116 from the execution module 110 to generate multiple mutated input sequences 124. The mutation module 120 may generate the mutated input sequences 124 by adding to, subtracting from, or changing the second input sequence 154. The mutation module 120 may generate multiple mutated input sequences 124.

The mutation module 120 may use the branch counts 116 as the input in generating the mutated input sequences 124. For example, the mutation module 120 may selectively mutate the input sequence 104, the input sequence 154, and/or the mutated input sequences 124 if the branch count 116 of the execution of the instrumented unknown binary program 162 using the mutated input sequences 124 as the input differs from the branch count 116 of the execution of the instrumented unknown binary program 162 using the input sequence 104, the input sequence 154, and other mutated input sequences 124 as the input. For example, if the branch count 116 for the input sequence 104 "HIKE" is 1, the branch count 116 for the mutated input sequence 124 "BIKE" is 1, and the branch count 116 for the mutated input sequence 124 "HIKER" is 2, the mutation module may select to perform further mutations of the mutated input sequence 124 "HIKER" rather than to perform further mutations of the mutated input sequence 124 "BIKE." The mutation module 120 may provide the multiple mutated input sequences 124 to the execution module 110.

The selection module 130 may obtain the sets of branch counts 116 and execution traces 118 that are generated by the execution module 110. The selection module 130 may be configured to select one or more of the execution traces 118 which are generated in the execution module 110. The selection module 130 may select a particular execution trace 118 based on the execution trace 118 and/or the branch count 116 associated with the execution trace 118.

For the first iteration of the process 100, the selection module 130 may compare each execution trace 118 to the execution trace 118 corresponding to the input sequence 104 and to each other execution trace 118 obtained from the execution module 110 to determine if the execution trace 118 is different from some or all of the execution traces 118 corresponding to the input sequence 104 and to each other execution trace 118 obtained from the execution module 110. The selection module 130 may select an execution trace 118 if the execution trace 118 is different from all or some of the execution traces 118 corresponding to the input sequence 104 and to each other execution trace 118 obtained from the execution module 110. In some embodiments, the selection module 130 may select an execution trace 118 that is different from all or some of the execution traces 118 corresponding to the input sequence 104 and to each other execution trace 118 obtained from the execution module 110 to avoid duplicating analysis that has already been performed to help to increase the speed and/or to help to improve the coverage of the analysis.

For subsequent iterations of the process 100, the selection module 130 may compare each execution trace 118 to the execution trace 118 corresponding to the input sequence 104, the execution trace 118 corresponding to the input sequence 154, each other execution trace 118 obtained from the execution module 110, and the multiple execution traces 138 that have already been selected to determine if the execution trace 118 is different from some or all the execution traces 118 and the execution traces 138 that have already been selected. The selection module 130 may select an execution trace 118 if the execution trace 118 is different from all or some of the execution traces 118 corresponding to the input sequence 104, the execution trace 118 corresponding to the input sequence 154, each other execution trace 118 obtained from the execution module 110, and the execution traces 138 that have already been selected. In some embodiments, the selection module 130 may select an execution trace 118 that is different from all or some of the execution traces 118 corresponding to the input sequence 104, the execution trace 118 corresponding to the input sequence 154, each other execution trace 118 obtained from the execution module 110, and the execution traces 138 that have already been selected to avoid duplicating analysis that has already been performed to help to increase the speed and/or to help to improve the coverage of the analysis.

In some embodiments, for the first iteration of the process 100, the selection module 130 may compare the branch counts 116 corresponding to each execution trace 118 to each of the branch counts 116 corresponding to the input sequence 104 and to each other execution trace 118 obtained from the execution module 110 to determine if the branch count 116 corresponding to an execution trace 118 is different from each of the branch counts 116 corresponding to the input sequence 104 and to each other execution trace 118 obtained from the execution module 110. The selection module 130 may select an execution trace 118 if the branch count 116 corresponding to the execution trace 118 is different from each of the branch counts 116 corresponding to some or all of the input sequence 104 and each other execution trace 118 obtained from the execution module 110. In some embodiments, the selection module 130 may select an execution trace 118 if the branch count 116 corresponding to the execution trace 118 is different from each of the branch counts 116 corresponding to some or all of the input sequence 104 and each other execution trace 118 obtained from the execution module 110 to avoid duplicating analysis that has already been performed to help to increase the speed and/or to help to improve the coverage of the analysis.

In some embodiments, for subsequent iterations of the process 100, the selection module 130 may compare the branch counts 116 corresponding to each execution trace 118 to determine if the branch count 116 corresponding to an execution trace 118 is different from each of the branch counts 116 corresponding to all of the execution traces 138 that have already been selected, the execution traces 138 corresponding to the input sequence 104, the input sequence 154, and each other execution trace 118 obtained from the execution module 110. The selection module may select an execution trace 118 if the branch count 116 corresponding to the execution trace 118 is different from each of the branch counts 116 corresponding to some or all of the execution traces 138 that have already been selected and from the branch counts 116 corresponding to the input sequence 104, the input sequence 154, and each other execution trace 118 obtained from the execution module 110.

For example, many mutated input sequences 124 when used as inputs to the instrumented unknown binary program 162 may result in the execution of the instrumented unknown binary program 162 terminating quickly, potentially at the first branch instruction, because the input is not accepted by the unknown binary program 102. In these and other embodiments, during the first iteration of the process 100, the selection module 130 may select an execution trace 118 that corresponds to a branch count 116 that is different from other branch counts 116 corresponding to some or all of the execution trace 118 of the input sequence 104 and the execution traces 118 corresponding to the other mutated input sequences 124. In these and other embodiments, during subsequent iterations of the process 100, the selection module 130 may select an execution trace 118 that corresponds to a branch count 116 that is different from other branch counts 116 corresponding to some or all of the execution traces 138 that have already been selected and from the branch counts 116 corresponding to the input sequence 104, the input sequence 154, and each other execution trace 1118 obtained from the execution module 110. In some embodiments, selecting an execution trace 118 during the first iteration of the process 100 that corresponds to a branch count 116 that is different from the branch counts 116 corresponding to all of the execution trace 118 of the input sequence 104 and the execution traces 118 corresponding to the other mutated input sequences 124 and selecting an execution trace 118 during subsequent iterations of the process 100 that corresponds to a branch count 116 that is different from the branch counts 116 corresponding to all of the execution trace 118 of the input sequence 104 and the execution traces 118 corresponding to the other mutated input sequences 124 may result in an increase in an amount of the unknown binary program 102 explored. An increase in the amount of the unknown binary program 102 that is explored may result because the selected execution trace 138 corresponds to branch instructions of the unknown binary program 102 that have not been selected. In some embodiments, the selection module 130 may select multiple execution traces 118 and prioritize the execution traces 118 according to the branch counts 116 corresponding to the execution traces 118, how recently the input sequence 104, the input sequence 154, or the mutated input sequence 124 corresponding to the execution trace 118 was generated, or by some other priority scheme. The execution trace 118 with the highest priority may be designated as the selected execution trace 138. The selected execution trace 138 may be provided to the negating module 140.

The negating module 140 may obtain the selected execution trace 138 and the unknown binary program 102. The negating module 140 may be configured to modify the selected execution trace 138. The negating module 140 may modify the selected execution trace 138 by selecting a branch instruction in the execution trace 138, generating a branch condition corresponding to the selected branch, negating the branch condition, and incorporating the negated branch condition into the selected execution trace 138.

For example, in some embodiments, the execution trace 138 may contain a branch instruction which corresponds to a branch instruction in the unknown binary program 102. The branch instruction in the unknown binary program 102 may contain a logical condition or multiple logical conditions, which may be conditions or constraints, that may determine which instruction will be executed following execution of the branch instruction. Using the selected execution trace 138, the negating module 140 may select a branch instruction in the selected execution trace 138. The negating module 140 may select the first branch instruction in the selected execution trace 138, the last branch instruction in the selected execution trace 138, or any other branch instruction in the selected execution trace 138. In some embodiments, the negating module 140 may select at least one branch instruction. In some embodiments, the negating module 140 may select a single branch instruction. In some embodiments, during one iteration of the negating module 140, the negating module may select the last branch instruction in the selected execution trace 138. During a subsequent iteration of the negating module 140, the negating module 140 may select the second to last branch instruction in the selected execution trace 138. The negating module 140 may iterate until it has selected during subsequent iterations each of the branch instructions in the selected execution trace 138.

The negating module 140 may generate a branch condition, corresponding to the selected branch instruction of the selected execution trace 138, using the unknown binary program 102. The branch condition may be generated by determining a logical condition in the branch instruction of the unknown binary program 102 that, when true, may cause the execution of the branch instruction to execute the same instruction following execution of the branch instruction as in the selected execution trace 138. The branch condition may be a logical constraint or condition. The negating module 140 may negate the branch condition to create a new branch condition. The new branch condition may be a logical condition that, when true, may cause the execution of the branch instruction to execute a different instruction following execution of the branch instruction than in the selected execution trace 138. For example, a branch condition may compare a variable to a quantity to determine if the variable is more than the quantity. When the variable is more than the quantity, a first instruction stemming from the branch instruction may be executed. When the variable is less than the quantity, a second instruction stemming from the branch instruction may be executed. If, when executed by the execution module 110 using an input sequence corresponding to the selected execution trace 138, the first instruction was executed, the negating module 140 may negate the branch condition to create a new branch condition that results in the second instruction being executed when the new branch condition is true. If the execution trace 138 includes more than one branch instruction, any number of the branch instructions may be selected and the corresponding branch conditions may be negated to create a new path.

The negating module 140 may also be configured to generate branch conditions for the branch instructions of the selected execution trace 138 that are not selected to be negated. For each branch instruction of the selected execution trace 138 that was not selected to be negated, the negating module 140 may determine the logical conditions associated with the branch instruction of the unknown binary program 102. The negating module 140 may determine if a logical condition being true causes the execution of the branch instruction to execute the instructions stemming from the branch instruction corresponding to the selected execution trace 138. If the logical condition being true causes the execution of the branch instruction to execute the instructions stemming from the branch instruction corresponding to the selected execution trace 138, the negating module 140 may select the logical condition as the branch condition.

In some embodiments, the branch conditions for the branch instructions that are negated and are not negated may be combined to generate the symbolic path condition 142. Thus, the symbolic path condition 142 may be a union of each of the branch conditions corresponding to branch instructions that are not selected to be negated and the new branch conditions corresponding to branch instructions that are negated. In some embodiments, the negating module 140 may be configured to combine the branch conditions corresponding to branch instructions that are not negated that are before the selected branch instruction and not branch conditions corresponding to branch instructions that are not negated that are after the selected branch instruction. For example, if the selected execution trace 138 has four branch instructions and the third branch instruction is selected to be negated, the negating module may combine the branch condition for the first branch, the branch condition for the second branch, and the new branch condition for the third branch to generate the symbolic path condition 142, but not the branch condition for the fourth branch.

In some embodiments, the negating module 140 may be configured to symbolically execute the unknown binary program 102 based on the branch conditions corresponding to the branch instructions that are not negated with the new branch conditions corresponding to the branch instructions that are negated to generate the symbolic path condition 142. The symbolic path condition 142 may be a set of branch conditions and new branch conditions and the operations performed on the input sequence 104, the input sequence 154, or the mutated input sequence 124 corresponding to the selected execution trace 138. The symbolic path condition 142 may indicate symbolically what input sequence may result in execution of the unknown binary program 102 proceeding down the instructions stemming from the negated branch instruction not corresponding to the instructions in the selected execution trace 138. The negating module 140 may provide the symbolic path condition 142 to the solver module 150.

Concrete execution of the unknown binary program 102 may be execution of the unknown binary program 102 with a particular input. For example, execution of the unknown binary program 102 with input sequence 104 as the input may be concrete execution of the unknown binary program 102. Alternatively or additionally, execution of the unknown binary program 102 with the input sequence 154 as the input may be concrete execution of the unknown binary program 102. Alternatively or additionally, execution of the unknown binary program 102 with the mutated input sequences 124 as the input may be concrete execution of the unknown binary program 102. For each concrete execution of the unknown binary program 102, the execution may evaluate each instruction in the unknown binary program 102 based on the input. Symbolic execution of the unknown binary program may be execution of the unknown binary program 102 with a symbolic value rather than with a particular input. For example, execution of the unknown binary program 102 with a symbolic value x as the input may be symbolic execution of the unknown binary program 102. During symbolic execution of the unknown binary program 102, the execution may evaluate each instruction in the unknown binary program 102 based on the symbolic value x and maintain symbolic expressions during the execution.

An example of the operation of the negating module 140 follows. In this example, the selected execution trace 138 may have three branch instructions. The negating module 140 may select the third branch instruction. The branch condition in the unknown binary program 102 corresponding to the third branch instruction in the selected execution trace 138 may be "input has four or more vowels." The negating module 140 may negate the branch condition to create a new branch condition, "input has less than four vowels." The negating module may generate branch conditions corresponding to the first and second branch instructions that are not selected. The branch condition corresponding to the first branch instruction may be "input begins with the letter 'T.'" The branch condition corresponding to the second branch instruction may be "input has a second letter of 'R.'" The negating module may combine the branch conditions corresponding to the first and second branch instructions of the selected execution trace 138 with the new branch condition to generate a symbolic path condition 142, "input begins with the letter 'T' AND input has a second letter of 'R' AND input has less than four vowels," which may be provided to the solver module 150.

The solver module 150 may be configured to solve the symbolic path condition 142 to generate an input sequence 154. The execution of the unknown binary program 102 using the input sequence 154 as the input may result in an execution trace 118 corresponding to the selected execution trace 138 with a different instruction following the selected branch. In some embodiments, the solver module 150 may use theorem proving to solve the symbolic path condition 142 in order to generate a new input sequence 154. Theorem proving may be a method of proving mathematical theorems using processors and computer instructions. Alternatively or additionally, any known method of solving symbolic constraints may be employed to solve the symbolic path condition 142 to generate the new input sequence 154. The solver module 150 may provide the new input sequence 154 to the execution module 110 and/or the mutation module 120.

An example of the operation of the solver module 150 follows. In this example, the symbolic path condition 142 may be "input begins with the letter 'T' AND input has a second letter of 'R' AND input has less than four vowels." The solver module 150 may solve the symbolic path condition 142 to generate the second input sequence 154, "TREE," which satisfies each of the conditions in the symbolic path condition 142: the first letter is "T," the second letter is "R," and there are two vowels, which is less than four.

After the first iteration of the process 100, the solver module 150 may provide the new input sequence 154 to the execution module 110 and the mutation module 120. The process 100 may iterate a second time, a third time, or any number of subsequent times. During each iteration of the process 100, the mutation module 120 may generate multiple mutated input sequences 124 from the input sequence 154. The execution module 110 may perform multiple executions of the input sequence 154 and the mutated input sequences 124. During each iteration of the process 100, the selection module 130 may select an execution trace 118 if the execution trace 118 is different from the selected execution trace 138 that was selected during any prior iteration of the process 100. The negating module 140 may generate a symbolic path condition 142. The solver module 150 may solve the symbolic path condition 150 to generate an input sequence 154. The iteration of the process 100 may begin again.

The process 100 may be performed to find more of the unknown binary program 102 to execute and to test. The process 100 may iterate a second time, a third time, or any number of subsequent times to discover additional branches of the unknown binary program 102. In some embodiments, the process 100 may discover additional inputs in the second iteration, the third iteration, or any subsequent iterations of the process 100 that were not discovered during the first iteration of the process 100. Each subsequent iteration of the process 100 may discover more of the unknown binary program 102 to execute and to test.

An example of the process 100 follows. The input sequence 104 may have a single input, "HELLO." The execution module 110 may execute the unknown binary program 102 with the input sequence 104, "HELLO." The execution may result in a branch count 116 of 1 and an execution trace 116.

The mutation module 120 may mutate the input sequence 104 to generate mutated input sequences 154 "CELLO," "HELLO OK", and "HE" by changing, addition, and subtraction respectively. The execution module 110 may also execute the unknown binary program 102 with each of the three different mutated input sequences 124 of the input sequence 104 to generate a branch count 116 and an execution trace 118 for each of the three different mutated input sequences 124. For the "CELLO" mutated input sequence 124, the branch count 116 may be 1; for the "HE" mutated input sequence 124, the branch count 116 may be 1; and for the "HELLO OK" mutated input sequence 124, the branch count 116 may be 2.

The selection module 130 may compare the branch counts 116 for each of the three mutated input sequences 124 and the branch count 116 for the input sequence 104 and select the execution trace 118 corresponding to the "HELLO OK" mutated input sequence 124 because the branch count 116 corresponding to the execution trace 118 is different from the branch counts 116 of the other mutated input sequences and the branch count 116 for the input sequence 104 "HELLO," which may all be 1. The negating module 140 may select the second branch instruction in the selected execution trace 138 and negate the branch condition corresponding to the second branch instruction in the execution trace 138 for "HELLO OK" to create a new symbolic path condition 142. The solver module 150 may then solve the new symbolic path condition 142 to generate a new input sequence 154 "HELLO <token>."

Modifications, additions, or omissions may be made to the process 100 without departing from the scope of the present disclosure. In some embodiments, one or more of the modules may be performed in a different order. In other embodiments, the process 100 may be performed multiple times. If the process 100 is performed multiple times, the successive input sequences 154 may be provided to the execution module 110 and the mutation module 120. The mutation module 120 may mutate each successive input sequence 154 in a similar manner as the input sequence 104, through additions, subtractions, changes, and/or other mutations to generate additional mutated input sequences 124. The additional mutated input sequences 124 may be provided to the execution module 110.

In some embodiments, the instrumentation module may be absent and the execution module 110 may perform executions of the unknown binary program 102 instead of executions of the instrumented unknown binary program 162. In some embodiments, the selection module 130 may select a mutated input sequence 124 and provide the mutated input sequence 124 and the execution trace 118 corresponding to the selected mutated input sequence 124 to the negating module 140.

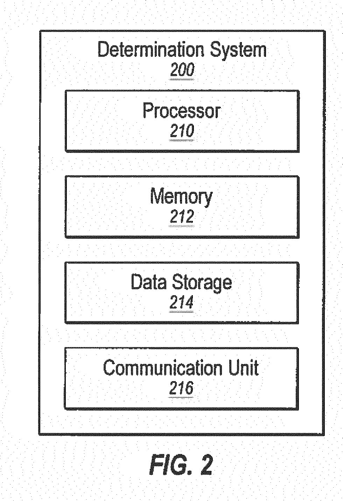

Fig. 2 is a block diagram of an example input determination system 200, which may be arranged in accordance with at least one embodiment described in this disclosure. As illustrated in Fig. 2, the system 200 may include a processor 210, a memory 212, a data storage 214, and a communication unit 216.

Generally, the processor 210 may include any suitable special-purpose or general-purpose computer, computing entity, or processing device including various computer hardware or software modules and may be configured to execute instructions stored on any applicable computer-readable storage media. For example, the processor 210 may include a microprocessor, a microcontroller, a digital signal processor (DS), an application-specific integrated circuit (ASIC), a Field-Programmable Gate Array (FPGA), or any other digital or analog circuitry configured to interpret and/or to execute program instructions and/or to process data. Although illustrated as a single processor in Fig. 2, it is understood that the processor 210 may include any number of processors distributed across any number of network or physical locations that are configured to perform individually or collectively any number of operations described herein. In some embodiments, the processor 210 may interpret and/or execute program instructions and/or process data stored in the memory 212, the data storage 214, or the memory 212 and the data storage 214. In some embodiments, the processor 210 may fetch program instructions from the data storage 214 and load the program instructions in the memory 212. After the program instructions are loaded into the memory 212, the processor 210 may execute the program instructions, such as instructions to perform the process 100, the method 300, and/or the method 400 of Figs. 1, 3, and 4, respectively.

The memory 212 and the data storage 214 may include computer-readable storage media or one or more computer-readable storage mediums for carrying or having computer-executable instructions or data structures stored thereon. Such computer-readable storage media may be any available media that may be accessed by a general-purpose or special-purpose computer, such as the processor 210. By way of example, and not limitation, such computer-readable storage media may include non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store desired program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 210 to perform a certain operation or group of operations.

The communication unit 216 may be configured to receive an unknown binary program and to provide the unknown binary program to the data storage 214. In some embodiments, the communication unit 216 may be configured to receive inputs and input sequences for the unknown binary program. The communication unit 216 may be configured to provide the inputs and input sequences to the data storage 214. After being received by the data storage 214, the unknown binary program and instructions may be executed using the processor 210 with the inputs and input sequences as input. In some embodiments, discovered inputs and mutated inputs may be provided outside the system 200 using the communication unit 216.

Modifications, additions, or omissions may be made to the system 200 without departing from the scope of the present disclosure. For example, the data storage 214 may be located in multiple locations and accessed by the processor 210 through a network.

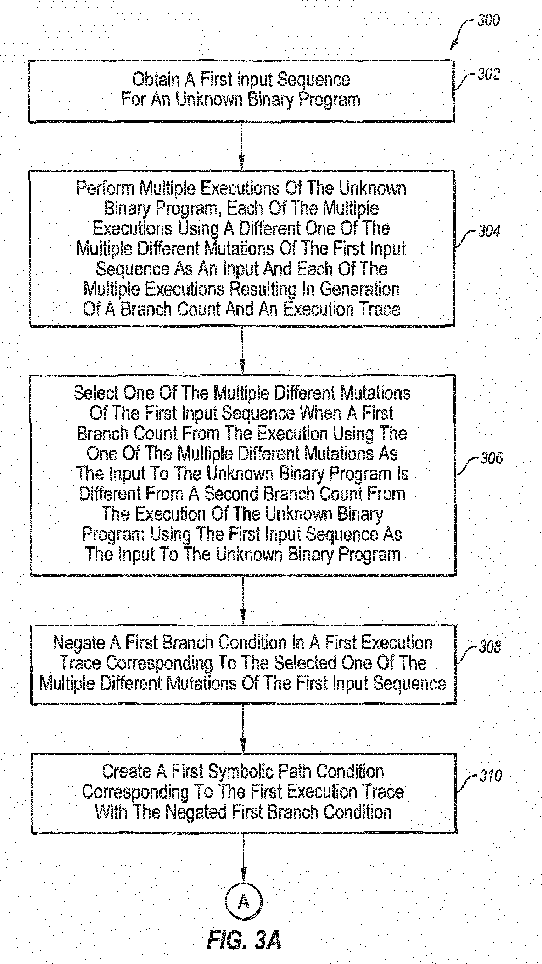

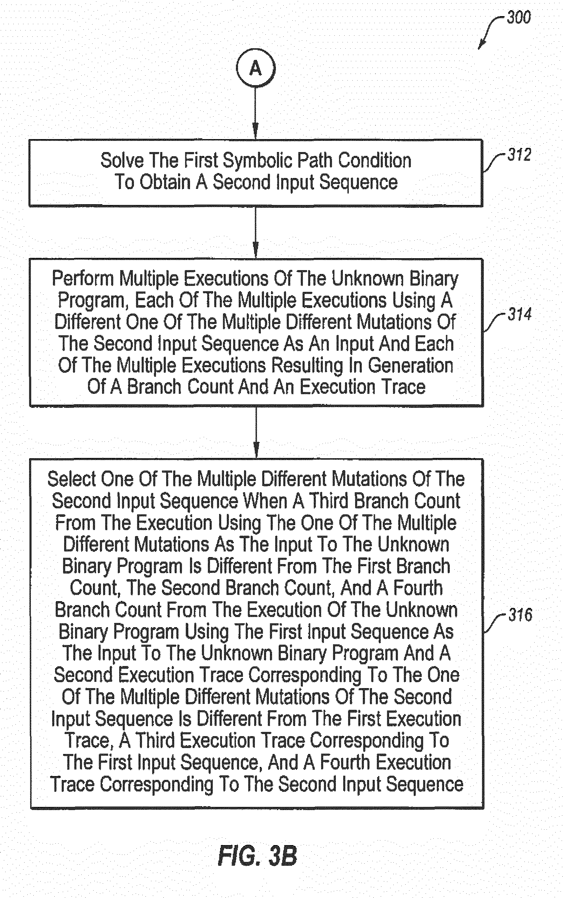

Figs. 3A and 3B are a flow chart of example method 300 to generate an input sequence for an unknown binary program, which may be arranged in accordance with at least one embodiment described in this disclosure. The method 300 may be implemented, in some embodiments, by a system, such as the system 200 of Fig. 2. In some embodiments, the method 300 may be implemented by a processor executing computer-readable instructions stored on a non-transitory computer-readable medium. Although illustrated as discrete blocks, various blocks may be divided into additional blocks, combined into fewer blocks, or eliminated, depending on the desired implementation.

The method 300 may begin at block 302, where a first input sequence for an unknown binary program may be obtained. The input sequence may include two or more different inputs. The inputs for the input sequence may have been determined as valid inputs for the unknown binary program. In some embodiments, one or more of the inputs may include a command determined as valid for the unknown binary program and an argument associated with the command. In some embodiments, the argument may also be determined as valid for the unknown binary program.

In block 304, multiple executions of the unknown binary program may be performed. Each of the multiple executions may use a different one of multiple different mutations of the first input sequence as an input. Each of the multiple executions may result in generation of a branch count and an execution trace. In some embodiments, the mutations may be additions to, subtractions from, and/or changes to the first input sequence. In some embodiments, the multiple executions of the unknown binary program may be multiple executions of an instrumented unknown binary program.

In block 306, one of the multiple different mutations of the first input sequence may be selected when a first branch count from the execution of the unknown binary program using the one of the multiple different mutations as the input is different from a second branch count from the execution of the unknown binary program using the first input sequence as the input.

In block 308, a first branch condition in a first execution trace corresponding to the selected one of the multiple different mutations of the first input sequence may be negated. In some embodiments, additional branch conditions in the first execution trace corresponding to the selected one of the multiple different mutations of the first input sequence may also be negated.

In block 310, a first symbolic path condition corresponding to the first execution trace with the negated branch condition may be created. In some embodiments, the first symbolic path condition may include symbolic representation of the non-branch instructions executed during execution of the unknown binary program with the selected mutated input sequence as the input. In some embodiments, the first symbolic path condition may include instructions in the first execution trace before the first branch condition but not instructions after the first branch condition.

In block 312, a second input sequence may be obtained by solving the first symbolic path condition. In some embodiments, the first symbolic path condition may be solved using a solver. In some embodiments, the first symbolic path condition may be solved using theorem proving.

In block 314, multiple executions of the unknown binary program may be performed. Each of the multiple executions may use a different one of multiple different mutations of the second input sequence as an input. Each of the multiple executions may result in generation of a branch count and an execution trace. In some embodiments, the mutations may be additions to, subtractions from, and/or changes to the first input sequence. In some embodiments, the multiple executions of the unknown binary program may be multiple executions of an instrumented unknown binary program.

In block 316, one of the multiple different mutations of the second input sequence may be selected when a third branch count from the execution of the unknown binary program using the one of the multiple different mutations as the input is different from the first branch count, the second branch count, and a fourth branch count from the execution of the unknown binary program using the second input sequence as the input and a second execution trace corresponding to the one of the multiple different mutations of the second input sequence is different from the first execution trace, a third execution trace corresponding to the first input sequence, and a fourth execution trace corresponding to the second input sequence.

One skilled in the art will appreciate that, for this and other processes and methods disclosed herein, the functions performed in the processes and methods may be implemented in differing order. Furthermore, the outlined steps and operations are only provided as examples, and some of the steps and operations may be optional, combined into fewer steps and operations, or expanded into additional steps and operations without detracting from the essence of the disclosed embodiments.

For example, the method 300 may further include instrumenting the unknown binary program by adding additional code instructions in the unknown binary program that output branch counts of the number of branches executed by the unknown binary program and an execution trace of the execution of the unknown binary program.

In some embodiments, the input sequence may be one or more variables. In some embodiments, the method 300 may further include negating a second branch condition in a second execution trace corresponding to the selected one of the multiple different mutations of the second input sequence. In these and other embodiments, the method 300 may further include creating a second symbolic path condition corresponding to the second execution trace with the negated second branch condition. In these and other embodiments, the method 300 may further include solving the second symbolic path condition to obtain a third input sequence.

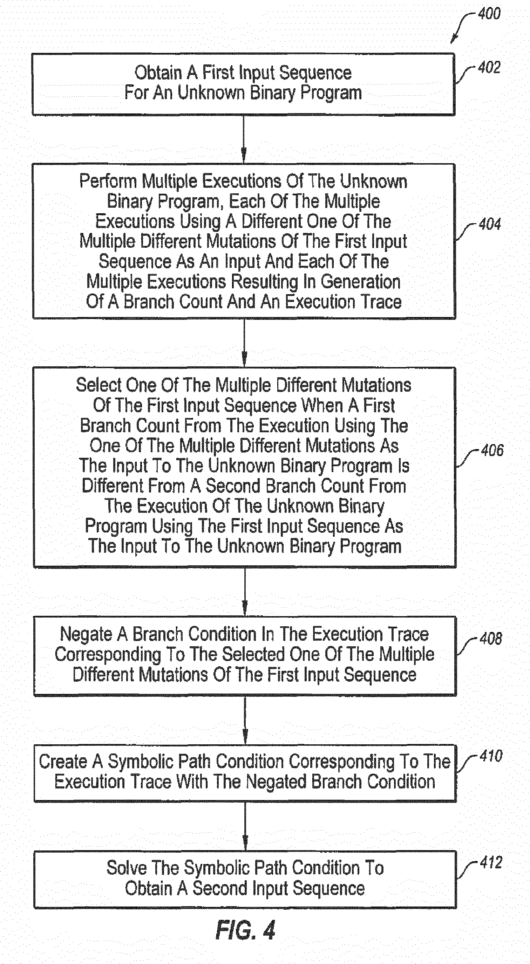

Fig. 4 is a flow chart of example method 400 to generate an input sequence for an unknown binary program, which may be arranged in accordance with at least one embodiment described in this disclosure. The method 400 may be implemented, in some embodiments, by a system, such as the system 200 of Fig. 2. In some embodiments, the method 400 may be implemented by a processor executing computer-readable instructions stored on a non-transitory computer-readable medium. Although illustrated as discrete blocks, various blocks may be divided into additional blocks, combined into fewer blocks, or eliminated, depending on the desired implementation.

The method 400 may begin at block 402, where a first input sequence for an unknown binary program may be obtained. The input sequence may include two or more different inputs. The inputs for the input sequence may have been determined as valid inputs for the unknown binary program. In some embodiments, one or more of the inputs may include a command determined as valid for the unknown binary program and an argument associated with the command. In some embodiments, the argument may also be determined as valid for the unknown binary program.

In block 404, multiple executions of the unknown binary program may be performed. Each of the multiple executions may use a different one of multiple different mutations of the first input sequence as an input. Each of the multiple executions may result in generation of a branch count and an execution trace. In some embodiments, the mutations may be additions to, subtractions from, and/or changes to the first input sequence. In some embodiments, the multiple executions of the unknown binary program may be multiple executions of an instrumented unknown binary program.

In block 406, one of the multiple different mutations of the first input sequence may be selected when a first branch count from the execution of the unknown binary program using the one of the multiple different mutations as the input is different from a second branch count from the execution of the unknown binary program using the first input sequence as the input.

In block 408, a branch condition in the execution trace corresponding to the selected one of the multiple different mutations of the first input sequence may be negated. In some embodiments, additional branch conditions in the execution trace corresponding to the selected one of the multiple different mutations of the first input sequence may also be negated.

In block 410, a symbolic path condition corresponding to the execution trace with the negated branch condition may be created. In some embodiments, the first symbolic path condition may include symbolic representation of the non-branch instructions executed during execution of the unknown binary program with the selected mutated input sequence as the input. In some embodiments, the symbolic path condition may include instructions in the execution trace before the branch condition but not instructions after the branch condition.

In block 412, a second input sequence may be obtained by solving the symbolic path condition. In some embodiments, the symbolic path condition may be solved using a solver. In some embodiments, the symbolic path condition may be solved using theorem proving.

One skilled in the art will appreciate that, for this and other processes and methods disclosed herein, the functions performed in the processes and methods may be implemented in differing order. Furthermore, the outlined steps and operations are only provided as examples, and some of the steps and operations may be optional, combined into fewer steps and operations, or expanded into additional steps and operations without detracting from the essence of the disclosed embodiments.

For example, the method 400 may further include instrumenting the unknown binary program by adding additional code instructions in the unknown binary program that output branch counts of the number of branches executed by the unknown binary program and an execution trace of the execution of the unknown binary program.

In some embodiments, the input sequence may be one or more variables. In some embodiments, the method 400 may further include performing multiple executions of the unknown binary, each of the multiple executions using a different one of the multiple different mutations of the second input sequence.

The embodiments described herein may include the use of a special-purpose or general-purpose computer including various computer hardware or software modules, as discussed in greater detail below.

Embodiments described herein may be implemented using computer-readable media for carrying or having computer-executable instructions or data structures stored thereon. Such computer-readable media may be any available media that may be accessed by a general-purpose or special-purpose computer. By way of example, and not limitation, such computer-readable media may include non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store desired program code in the form of computer-executable instructions or data structures and which may be accessed by a general-purpose or special-purpose computer. In these and other embodiments, the term "non-transitory" as explained herein should be construed to exclude only those types of transitory media that were found to fall outside the scope of patentable subject matter in the Federal Circuit decision of In re Nuijten, 500 F.3d 1346 (Fed. Cir. 2007). Combinations of the above may also be included within the scope of computer-readable media.

Computer-executable instructions comprise, for example, instructions and data which cause a general-purpose computer, special-purpose computer, or special-purpose processing device (e.g., one or more processors) to perform a certain function or group of functions. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims,

As used herein, the terms "module" or "component" may refer to specific hardware implementations configured to perform the operations of the module or component and/or software objects or software routines that may be stored on and/or executed by general-purpose hardware (e.g., computer-readable media, processing devices, etc.) of the computing system. In some embodiments, the different components, modules, engines, and services described herein may be implemented as objects or processes that execute on the computing system (e.g., as separate threads).

While some of the system and methods described herein are generally described as being implemented in software (stored on and/or executed by general-purpose hardware), specific hardware implementations or a combination of software and specific hardware implementations are also possible and contemplated. In this description, a "computing entity" may be any computing system as previously defined herein, or any module or combination of modulates running on a computing system.

Terms used herein and especially in the appended claims (*e.g*., bodies of the appended claims) are generally intended as "open" terms (*e.g*., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (*e.g*., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (*e*.*g*., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc. For example, the use of the term "and/or" is intended to be construed in this manner.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

Additionally, the use of the terms "first," "second," "third," etc., are not necessarily used herein to connote a specific order or number of elements. Generally, the terms "first," "second," "third," etc., are used to distinguish between different elements as generic identifiers. Absence a showing that the terms "first," "second," "third," etc., connote a specific order, these terms should not be understood to connote a specific order. Furthermore, absence a showing that the terms first," "second," "third," etc., connote a specific number of elements, these terms should not be understood to connote a specific number of elements. For example, a first widget may be described as having a first side and a second widget may be described as having a second side. The use of the term "second side" with respect to the second widget may be to distinguish such side of the second widget from the "first side" of the first widget and not to connote that the second widget has two sides.

All examples and conditional language recited herein are intended for pedagogical objects to aid the reader in understanding the invention and the concepts contributed by the inventor to furthering the art, and are to be construed as being without limitation to such specifically recited examples and conditions. Although embodiments of the present disclosure have been described in detail, it should be understood that the various changes, substitutions, and alterations could be made hereto without departing from the scope of the present disclosure.

## Claims

1. A method to determine a valid input sequence for an unknown binary program (102), wherein a valid input sequence is used to test the unknown binary program, the method comprising:
obtaining a first input sequence (104) for an unknown binary program (102), the unknown binary program (102) being a binary program with a specification, documentation and/or source code which is/are unavailable;
instrumenting the unknown binary program (102) such that execution of the instrumented unknown binary program (162) results in generation of a branch count (116) and an execution trace (118);
performing a plurality of executions of the instrumented unknown binary program (162), each of the plurality of executions using a different one of a plurality of different mutations of the first input sequence (124) as an input and each of the plurality of executions resulting in generation of a branch count (116) and an execution trace (118);
selecting one of the plurality of different mutations of the first input sequence (124) when a first branch count (116), which is from the execution using the one of the plurality of different mutations (124) as the input to the instrumented unknown binary program (162), is different from a second branch count (116) from the execution of the instrumented unknown binary program (162) using the first input sequence (104) as the input to the instrumented unknown binary program (162);
negating a branch condition in the execution trace (118) corresponding to the selected one of the plurality of different mutations of the first input sequence (138);
creating a symbolic path condition (142) corresponding to the execution trace (118) with the negated branch condition; and
solving the symbolic path condition (142) to obtain a second input sequence (154).

2. The method of claim 1, further comprising:
performing a plurality of second executions of the instrumented unknown binary program (162), each of the plurality of second executions using a different one of a plurality of different mutations of the second input sequence (124) as an input;
selecting one of the plurality of different mutations of the second input sequence (124) when a third branch count (116), which is from the execution using the one of the plurality of different mutations of the second input sequence (124) as the input to the instrumented unknown binary program (162) is different from a fourth branch count (116) from the execution of the instrumented unknown binary program using the second input sequence (154) as the input to the instrumented unknown binary program (162).

3. The method of claim 2, further comprising:
negating a second branch condition in a second execution trace (118) corresponding to the selected one of the plurality of different mutations of the second input sequence (138);
creating a second symbolic path condition (142) corresponding to the second execution trace (118) with the negated second branch condition; and
solving the second symbolic path condition (142) to obtain a third input sequence (154).

4. The method of claim 2 or 3, wherein the first input sequence (104) comprises one or more variables, and wherein the second input sequence (154) comprises one or more variables.

5. The method of claim 1, wherein negating a branch condition comprises changing a condition so that a different branch after the condition is taken during execution of the instrumented unknown binary program (162).

6. The method of claim 1 or 5, wherein the different mutations of the first input sequence (124) comprise additions, subtractions, or changes to the first input sequence (104).

7. The method of claim 6, wherein the different mutations of the first input sequence (124) are based on a branch count (116) of the first input sequence (104) and a branch count (116) of the mutations (124).

8. The method of any of claims 1 or 5 to 7, wherein the instrumented unknown binary program (162) comprises additional code instructions in the unknown binary program (102) that output the branch count (116) and the execution trace (118) from the execution of the instrumented unknown binary program (162).

9. One or more non-transitory computer readable media (212) that include instructions that when executed by one or more processors (210) perform operations to determine a valid input sequence for an unknown binary program (102), wherein a valid input sequence is used to test the unknown binary program, the operations comprising:
obtaining a first input sequence (104) for an unknown binary program (102), the unknown binary program (102) being a binary program with a specification, documentation and/or source code which is/are unavailable;
instrumenting the unknown binary program (102) such that execution of the instrumented unknown binary program (162) results in generation of a branch count (116) and an execution trace (118);
performing a plurality of executions of the instrumented unknown binary program (162), each of the plurality of executions using a different one of a plurality of different mutations of the first input sequence (124) as an input and each of the plurality of executions resulting in generation of a branch count (116) and an execution trace (118);
selecting one of the plurality of different mutations of the first input sequence (124) when a first branch count (116), which is from the execution using the one of the plurality of different mutations (124) as the input to the instrumented unknown binary program (162), is different from a second branch count (116) from the execution of the instrumented unknown binary program (162) using the first input sequence (104) as the input to the instrumented unknown binary program (162);
negating a branch condition in the execution trace (118) corresponding to the selected one of the plurality of different mutations of the first input sequence (138);
creating a symbolic path condition (142) corresponding to the execution trace (118) with the negated branch condition; and
solving the symbolic path condition (142) to obtain a second input sequence (154).

10. The one or more non-transitory computer readable media (212) of claim 9, wherein the first input sequence (104) comprises one or more variables, and wherein the second input sequence (154) comprises one or more variables.

11. The one or more non-transitory computer readable media (212) of claim 9, wherein negating a branch condition comprises changing a condition so that a different branch after the condition is taken during execution of the instrumented unknown binary program (162).

12. The one or more non-transitory computer readable media (212) of claim 9, wherein the different mutations of the first input sequence (124) comprise additions, subtractions, or changes to the first input sequence (104).

13. The one or more non-transitory computer readable media (212) of claim 12, wherein the different mutations of the first input sequence (124) are based on a branch count (116) of the first input sequence (104) and a branch count (116) of the mutations (124).

14. The one or more non-transitory computer readable media (212) of claim 9, wherein the instrumented unknown binary program (162) comprises additional code instructions in the unknown binary program (102) that output the branch count (116) and the execution trace (118) from the execution of the instrumented unknown binary program (162).

15. The one or more non-transitory computer readable media (212) of claim 14, wherein the symbolic path condition (142) is a first symbolic path condition, wherein the operations further comprise:
performing a plurality of second executions of the instrumented unknown binary program (162), each of the plurality of second executions using a different one of a plurality of different mutations of the second input sequence (124) as an input;
selecting one of the plurality of different mutations of the second input sequence (124) when a third branch count (116) from the execution using the one of the plurality of different mutations of the second input sequence (124) as the input to the instrumented unknown binary program (162) is different from a fourth branch count (116) from the execution of the instrumented unknown binary program (162) using the second input sequence (154) as the input to the instrumented unknown binary program (162);
negating a second branch condition in a second execution trace (118) corresponding to the selected one of the plurality of different mutations of the second input sequence (138);
creating a second symbolic path condition (142) corresponding to the second execution trace (118) with the negated second branch condition; and
solving the second symbolic path condition (142) to obtain a third input sequence (154).

## Patentansprüche

1. Verfahren zur Bestimmung einer gültigen Eingabesequenz für ein unbekanntes binäres Programm (102), wobei eine gültige Eingabesequenz dazu verwendet wird, das unbekannte binäre Programm zu testen, wobei das Verfahren Folgendes umfasst:
Beziehen einer ersten Eingabesequenz (104) für ein unbekanntes binäres Programm (102), wobei das unbekannte binäre Programm (102) ein binäres Programm mit einer Spezifikation, einer Dokumentation und/oder einem Quellcode ist, die/der nicht verfügbar ist/sind;
Instrumentieren des unbekannten binären Programms (102), so dass eine Ausführung des instrumentierten unbekannten binären Programms (162) zur Erzeugung einer Verzweigungsanzahl (116) und eines Ausführungsverfolgungsbelegs (118) führt;
Durchführen einer Vielzahl von Ausführungen des instrumentierten unbekannten binären Programms (162), wobei jede der Vielzahl von Ausführungen eine andere von einer Vielzahl von unterschiedlichen Mutationen der ersten Eingabesequenz (124) als eine Eingabe verwendet und jede der Vielzahl von Ausführungen zur Erzeugung einer Verzweigungsanzahl (116) und eines Ausführungsverfolgungsbelegs (118) führt;
Auswählen einer der Vielzahl von unterschiedlichen Mutationen der ersten Eingabesequenz (124), wenn eine erste Verzweigungsanzahl (116), die von der Ausführung ist, die die eine der Vielzahl von unterschiedlichen Mutationen (124) als die Eingabe zu dem instrumentierten unbekannten binären Programm (162) verwendet, sich von einer zweiten Verzweigungsanzahl (116) von der Ausführung des instrumentierten unbekannten binären Programms (162), die die erste Eingabesequenz (104) als die Eingabe zu dem instrumentierten unbekannten binären Programm (162) verwendet, unterscheidet;
Negieren einer Verzweigungsbedingung in dem Ausführungsverfolgungsbeleg (118), der der ausgewählten einen der Vielzahl von unterschiedlichen Mutationen der ersten Eingabesequenz (138) entspricht;
Erzeugen einer symbolischen Pfadbedingung (142), die dem Ausführungsverfolgungsbeleg (118) entspricht, mit der negierten Verzweigungsbedingung und
Lösen der symbolischen Pfadbedingung (142), um eine zweite Eingabesequenz (154) zu beziehen.

2. Verfahren nach Anspruch 1, weiterhin umfassend:
Durchführen einer Vielzahl von zweiten Ausführungen des instrumentierten unbekannten binären Programms (162), wobei jede der Vielzahl von zweiten Ausführungen eine andere von einer Vielzahl von unterschiedlichen Mutationen der zweiten Eingabesequenz (124) als eine Eingabe verwendet;
Auswählen einer der Vielzahl von unterschiedlichen Mutationen der zweiten Eingabesequenz (124), wenn eine dritte Verzweigungsanzahl (116), die von der Ausführung ist, die die eine der Vielzahl von unterschiedlichen Mutationen der zweiten Eingabesequenz (124) als die Eingabe zu dem instrumentierten unbekannten binären Programm (162) verwendet, sich von einer vierten Verzweigungsanzahl (116) von der Ausführung des instrumentierten unbekannten binären Programms, die die zweite Eingabesequenz (154) als die Eingabe zu dem instrumentierten unbekannten binären Programm (162) verwendet, unterscheidet.

3. Verfahren nach Anspruch 2, weiterhin umfassend:
Negieren einer zweiten Verzweigungsbedingung in einem zweiten Ausführungsverfolgungsbeleg (118), der der ausgewählten einen der Vielzahl von unterschiedlichen Mutationen der zweiten Eingabesequenz (138) entspricht;
Erzeugen einer zweiten symbolischen Pfadbedingung (142), die dem zweiten Ausführungsverfolgungsbeleg (118) entspricht, mit der negierten zweiten Verzweigungsbedingung und
Lösen der zweiten symbolischen Pfadbedingung (142), um eine dritte Eingabesequenz (154) zu beziehen.

4. Verfahren nach Anspruch 2 oder 3, wobei die erste Eingabesequenz (104) eine oder mehrere Variablen umfasst und wobei die zweite Eingabesequenz (154) eine oder mehrere Variablen umfasst.

5. Verfahren nach Anspruch 1, wobei das Negieren einer Verzweigungsbedingung ein Ändern einer Bedingung umfasst, so dass eine andere Verzweigung nach der Bedingung während einer Ausführung des instrumentierten unbekannten binären Programms (162) genommen wird.

6. Verfahren nach Anspruch 1 oder 5, wobei die unterschiedlichen Mutationen der ersten Eingabesequenz (124) Additionen, Subtraktionen oder Änderungen an der ersten Eingabesequenz (104) umfassen.

7. Verfahren nach Anspruch 6, wobei die unterschiedlichen Mutationen der ersten Eingabesequenz (124) auf einer Verzweigungsanzahl (116) der ersten Eingabesequenz (104) und einer Verzweigungsanzahl (116) der Mutationen (124) basieren.

8. Verfahren nach einem der Ansprüche 1 oder 5 bis 7, wobei das instrumentierte unbekannte binäre Programm (162) zusätzliche Codeanweisungen in dem unbekannten binären Programm (102) umfasst, die die Verzweigungsanzahl (116) und den Ausführungsverfolgungsbeleg (118) von der Ausführung des instrumentierten unbekannten binären Programms (162) ausgeben.

9. Ein oder mehrere nichtflüchtige computerlesbare Medien (212), die Anweisungen beinhalten, die bei Ausführung durch einen oder mehrere Prozessoren (210) Arbeitsschritte durchführen, um eine gültige Eingabesequenz für ein unbekanntes binäres Programm (102) zu bestimmen, wobei eine gültige Eingabesequenz dazu verwendet wird, das unbekannte binäre Programm zu testen, wobei die Arbeitsschritte Folgendes umfassen:
Beziehen einer ersten Eingabesequenz (104) für ein unbekanntes binäres Programm (102), wobei das unbekannte binäre Programm (102) ein binäres Programm mit einer Spezifikation, einer Dokumentation und/oder einem Quellcode ist, die/der nicht verfügbar ist/sind;
Instrumentieren des unbekannten binären Programms (102), so dass eine Ausführung des instrumentierten unbekannten binären Programms (162) zur Erzeugung einer Verzweigungsanzahl (116) und eines Ausführungsverfolgungsbelegs (118) führt;
Durchführen einer Vielzahl von Ausführungen des instrumentierten unbekannten binären Programms (162), wobei jede der Vielzahl von Ausführungen eine andere von einer Vielzahl von unterschiedlichen Mutationen der ersten Eingabesequenz (124) als eine Eingabe verwendet und jede der Vielzahl von Ausführungen zur Erzeugung einer Verzweigungsanzahl (116) und eines Ausführungsverfolgungsbelegs (118) führt;
Auswählen einer der Vielzahl von unterschiedlichen Mutationen der ersten Eingabesequenz (124), wenn eine erste Verzweigungsanzahl (116), die von der Ausführung ist, die die eine der Vielzahl von unterschiedlichen Mutationen (124) als die Eingabe zu dem instrumentierten unbekannten binären Programm (162) verwendet, sich von einer zweiten Verzweigungsanzahl (116) von der Ausführung des instrumentierten unbekannten binären Programms (162), die die erste Eingabesequenz (104) als die Eingabe zu dem instrumentierten unbekannten binären Programm (162) verwendet, unterscheidet;
Negieren einer Verzweigungsbedingung in dem Ausführungsverfolgungsbeleg (118), der der ausgewählten einen der Vielzahl von unterschiedlichen Mutationen der ersten Eingabesequenz (138) entspricht;
Erzeugen einer symbolischen Pfadbedingung (142), die dem Ausführungsverfolgungsbeleg (118) entspricht, mit der negierten Verzweigungsbedingung und
Lösen der symbolischen Pfadbedingung (142), um eine zweite Eingabesequenz (154) zu beziehen.

10. Ein oder mehrere nichtflüchtige computerlesbare Medien (212) nach Anspruch 9, wobei die erste Eingabesequenz (104) eine oder mehrere Variablen umfasst und wobei die zweite Eingabesequenz (154) eine oder mehrere Variablen umfasst.

11. Ein oder mehrere nichtflüchtige computerlesbare Medien (212) nach Anspruch 9, wobei das Negieren einer Verzweigungsbedingung ein Ändern einer Bedingung umfasst, so dass eine andere Verzweigung nach der Bedingung während einer Ausführung des instrumentierten unbekannten binären Programms (162) genommen wird.

12. Ein oder mehrere nichtflüchtige computerlesbare Medien (212) nach Anspruch 9, wobei die unterschiedlichen Mutationen der ersten Eingabesequenz (124) Additionen, Subtraktionen oder Änderungen an der ersten Eingabesequenz (104) umfassen.

13. Ein oder mehrere nichtflüchtige computerlesbare Medien (212) nach Anspruch 12, wobei die unterschiedlichen Mutationen der ersten Eingabesequenz (124) auf einer Verzweigungsanzahl (116) der ersten Eingabesequenz (104) und einer Verzweigungsanzahl (116) der Mutationen (124) basieren.

14. Ein oder mehrere nichtflüchtige computerlesbare Medien (212) nach Anspruch 9, wobei das instrumentierte unbekannte binäre Programm (162) zusätzliche Codeanweisungen in dem unbekannten binären Programm (102) umfasst, die die Verzweigungsanzahl (116) und den Ausführungsverfolgungsbeleg (118) von der Ausführung des instrumentierten unbekannten binären Programms (162) ausgeben.

15. Ein oder mehrere nichtflüchtige computerlesbare Medien (212) nach Anspruch 14, wobei die symbolische Pfadbedingung (142) eine erste symbolische Pfadbedingung ist, wobei die Arbeitsschritte weiterhin umfassen:
Durchführen einer Vielzahl von zweiten Ausführungen des instrumentierten unbekannten binären Programms (162), wobei jede der Vielzahl von zweiten Ausführungen eine andere von einer Vielzahl von unterschiedlichen Mutationen der zweiten Eingabesequenz (124) als eine Eingabe verwendet;
Auswählen einer der Vielzahl von unterschiedlichen Mutationen der zweiten Eingabesequenz (124), wenn eine dritte Verzweigungsanzahl (116) von der Ausführung, die die eine der Vielzahl von unterschiedlichen Mutationen der zweiten Eingabesequenz (124) als die Eingabe zu dem instrumentierten unbekannten binären Programm (162) verwendet, sich von einer vierten Verzweigungsanzahl (116) von der Ausführung des instrumentierten unbekannten binären Programms (162), die die zweite Eingabesequenz (154) als die Eingabe zu dem instrumentierten unbekannten binären Programm (162) verwendet, unterscheidet;
Negieren einer zweiten Verzweigungsbedingung in einem zweiten Ausführungsverfolgungsbeleg (118), der der ausgewählten einen der Vielzahl von unterschiedlichen Mutationen der zweiten Eingabesequenz (138) entspricht;
Erzeugen einer zweiten symbolischen Pfadbedingung (142), die dem zweiten Ausführungsverfolgungsbeleg (118) entspricht, mit der negierten zweiten Verzweigungsbedingung und
Lösen der zweiten symbolischen Pfadbedingung (142), um eine dritte Eingabesequenz (154) zu beziehen.

## Revendications

1. Procédé pour déterminer une séquence d'entrée valide pour un programme binaire inconnu (102), dans lequel une séquence d'entrée valide est utilisée pour tester le programme binaire inconnu, le procédé comprenant :
obtenir une première séquence d'entrée (104) pour un programme binaire inconnu (102), le programme binaire inconnu (102) étant un programme binaire avec une spécification, une documentation et/ou un code source qui est/sont indisponible (s) ;
instrumenter le programme binaire inconnu (102) de telle sorte qu'une exécution du programme binaire inconnu instrumenté (162) entraîne la génération d'un nombre de branches (116) et d'une trace d'exécution (118) ;
effectuer une pluralité d'exécutions du programme binaire inconnu instrumenté (162), chacune de la pluralité d'exécutions utilisant une différente d'une pluralité de mutations différentes de la première séquence d'entrée (124) en tant qu'entrée et chacune de la pluralité d'exécutions entraînant la génération d'un nombre de branches (116) et d'une trace d'exécution (118) ;
sélectionner une première de la pluralité de mutations différentes de la première séquence d'entrée (124) lorsqu'un premier nombre de branches (116), qui provient de l'exécution en utilisant la première de la pluralité de mutations différentes (124) en tant qu'entrée vers le programme binaire inconnu instrumenté (162), est différent d'un deuxième nombre de branches (116) provenant de l'exécution du programme binaire inconnu instrumenté (162) en utilisant la première séquence d'entrée (104) en tant qu'entrée du programme binaire inconnu instrumenté (162) ;
neutraliser une condition de branche dans la trace d'exécution (118) correspondant à celle sélectionnée parmi la pluralité de mutations différentes de la première séquence d'entrée (138) ;
créer une condition de trajet symbolique (142) correspondant à la trace d'exécution (118) avec la condition de branche neutralisée ; et
résoudre la condition de trajet symbolique (142) pour obtenir une deuxième séquence d'entrée (154).

2. Procédé selon la revendication 1, comprenant en outre les étapes consistant à :
exécuter une pluralité de secondes exécutions du programme binaire inconnu instrumenté (162), chacune de la pluralité de secondes exécutions utilisant une différente parmi une pluralité de mutations différentes de la deuxième séquence d'entrée (124) en tant qu'entrée ;
sélectionner une première de la pluralité de mutations différentes de la deuxième séquence d'entrée (124) lorsqu'un troisième nombre de branches (116), qui provient de l'exécution en utilisant la première de la pluralité de mutations différentes de la deuxième séquence d'entrée (124) en tant qu'entrée vers le programme binaire inconnu instrumenté (162) est différent d'un quatrième nombre de branches (116) provenant de l'exécution du programme binaire inconnu instrumenté en utilisant la deuxième séquence d'entrée (154) en tant qu'entrée du programme binaire inconnu instrumenté (162).

3. Procédé selon la revendication 2, comprenant en outre les étapes consistant à :
neutraliser une seconde condition de branche dans une seconde trace d'exécution (118) correspondant à celle sélectionnée parmi la pluralité de mutations différentes de la deuxième séquence d'entrée (138) ;
créer une seconde condition de trajet symbolique (142) correspondant à la seconde trace d'exécution (118) avec la seconde condition de branche neutralisée ; et
résoudre la seconde condition de trajet symbolique (142) pour obtenir une troisième séquence d'entrée (154).

4. Procédé selon la revendication 2 ou 3, dans lequel la première séquence d'entrée (104) comprend une ou plusieurs variables, et dans lequel la deuxième séquence d'entrée (154) comprend une ou plusieurs variables.

5. Procédé selon la revendication 1, dans lequel la neutralisation d'une condition de branche comprend la modification d'une condition de sorte qu'une branche différente après la condition est prise pendant l'exécution du programme binaire inconnu instrumenté (162).

6. Procédé selon la revendication 1 ou 5, dans lequel les différentes mutations de la première séquence d'entrée (124) comprennent des additions, des soustractions ou des modifications à la première séquence d'entrée (104).

7. Procédé selon la revendication 6, dans lequel les différentes mutations de la première séquence d'entrée (124) sont basées sur un nombre de branches (116) de la première séquence d'entrée (104) et un nombre de branches (116) des mutations (124).

8. Procédé selon l'une quelconque des revendications 1 ou 5 à 7, dans lequel le programme binaire inconnu instrumenté (162) comprend des instructions de code supplémentaires dans le programme binaire inconnu (102) qui délivrent en sortie le nombre de branches (116) et la trace d'exécution (118) à partir de l'exécution du programme binaire inconnu instrumenté (162).

9. Un ou plusieurs supports lisibles par ordinateur non transitoires (212) comprenant des instructions qui, lorsqu'elles sont exécutées par un ou plusieurs processeurs (210), effectuent des opérations visant à déterminer une séquence d'entrée valide pour un programme binaire inconnu (102), où une séquence d'entrée valide est utilisée pour tester le programme binaire inconnu, les opérations comprenant :
obtenir une première séquence d'entrée (104) pour un programme binaire inconnu (102), le programme binaire inconnu (102) étant un programme binaire avec une spécification, une documentation et/ou un code source qui est/sont indisponible(s) ;
instrumenter le programme binaire inconnu (102) de telle sorte qu'une exécution du programme binaire inconnu instrumenté (162) entraîne la génération d'un nombre de branches (116) et d'une trace d'exécution (118) ;
effectuer une pluralité d'exécutions du programme binaire inconnu instrumenté (162), chacune de la pluralité d'exécutions utilisant une différente d'une pluralité de mutations différentes de la première séquence d'entrée (124) en tant qu'entrée et chacune de la pluralité d'exécutions entraînant la génération d'un nombre de branches (116) et d'une trace d'exécution (118) ;
sélectionner une première de la pluralité de mutations différentes de la première séquence d'entrée (124) lorsqu'un premier nombre de branches (116), qui provient de l'exécution en utilisant la première de la pluralité de mutations différentes (124) en tant qu'entrée vers le programme binaire inconnu instrumenté (162), est différent d'un deuxième nombre de branches (116) provenant de l'exécution du programme binaire inconnu instrumenté (162) en utilisant la première séquence d'entrée (104) en tant qu'entrée du programme binaire inconnu instrumenté (162) ;
neutraliser une condition de branche dans la trace d'exécution (118) correspondant à celle sélectionnée parmi la pluralité de mutations différentes de la première séquence d'entrée (138) ;
créer une condition de trajet symbolique (142) correspondant à la trace d'exécution (118) avec la condition de branche neutralisée ; et
résoudre la condition de trajet symbolique (142) pour obtenir une deuxième séquence d'entrée (154).

10. Un ou plusieurs supports lisibles par ordinateur non transitoires (212) selon la revendication 9, où la première séquence d'entrée (104) comprend une ou plusieurs variables, et où la deuxième séquence d'entrée (154) comprend une ou plusieurs variables.

11. Un ou plusieurs supports lisibles par ordinateur non transitoires (212) selon la revendication 9, où la neutralisation d'une condition de branche comprend la modification d'une condition de sorte qu'une branche différente après la condition est prise pendant l'exécution du programme binaire inconnu instrumenté (162).

12. Un ou plusieurs supports lisibles par ordinateur non transitoires (212) selon la revendication 9, où les différentes mutations de la première séquence d'entrée (124) comprennent des additions, des soustractions ou des modifications à la première séquence d'entrée (104).

13. Un ou plusieurs supports lisibles par ordinateur non transitoires (212) selon la revendication 12, où les différentes mutations de la première séquence d'entrée (124) sont basées sur un nombre de branches (116) de la première séquence d'entrée (104) et un nombre de branches (116) des mutations (124).

14. Un ou plusieurs supports lisibles par ordinateur non transitoires (212) selon la revendication 9, où le programme binaire inconnu instrumenté (162) comprend des instructions de code supplémentaires dans le programme binaire inconnu (102) qui délivrent en sortie le nombre de branches (116) et la trace d'exécution (118) de l'exécution du programme binaire inconnu instrumenté (162).

15. Un ou plusieurs supports lisibles par ordinateur non transitoires (212) selon la revendication 14, où la condition de trajet symbolique (142) est une première condition de trajet symbolique, où les opérations comprennent en outre :
effectuer une pluralité de secondes exécutions du programme binaire inconnu instrumenté (162), chacune de la pluralité de secondes exécutions utilisant une différente parmi une pluralité de mutations différentes de la deuxième séquence d'entrée (124) en tant qu'entrée ;
sélectionner une première de la pluralité de mutations différentes de la deuxième séquence d'entrée (124) lorsqu'un troisième compte de branches (116) provenant de l'exécution en utilisant la première de la pluralité de mutations différentes de la deuxième séquence d'entrée (124) en tant qu'entrée du programme binaire inconnu instrumenté (162) est différent d'un quatrième nombre de branches (116) provenant de l'exécution du programme binaire inconnu instrumenté (162) en utilisant la deuxième séquence d'entrée (154) en tant qu'entrée du programme binaire inconnu instrumenté (162) ;
neutraliser une seconde condition de branche dans une deuxième trace d'exécution (118) correspondant à celle sélectionnée parmi la pluralité de mutations différentes de la deuxième séquence d'entrée (138) ;
créer une seconde condition de trajet symbolique (142) correspondant à la seconde trace d'exécution (118) avec la seconde condition de branche neutralisée ; et
résoudre la seconde condition de trajet symbolique (142) pour obtenir une troisième séquence d'entrée (154).
